# EUROPEAN PATENT APPLICATION

(11) **EP 0 613 620 A2**
(43) Date of publication of application: **07.09.1994**
(21) Application number: 94650007.1
(22) Date of filing: 03.03.1994
(51) Int. Cl.: A23D 7/02

(54) **Process for the production of a dairy spread**

(30) Priority: 03.03.1993 IE 930155
(71) Applicant: PASCONT TECHNOLOGIES LIMITED, Cork (IE)
(72) Inventor: Whelton, Thomas, County Cork (IR); O'Gallchobhair, Liam Michael, County Tipperary (IR); Coakley, Timothy Finbar, County Limerick (IR)
(74) Representative: McKeown, Yvonne Mary

(57) **Abstract**

A dairy spread comprising dairy and edible non-dairy fat is prepared by a process including the steps of (a) concentrating dairy cream to 55-85% fat, (b) blending the concentrated cream with non-dairy fat at 50-70°C, (c) cooling the blend to 15-30°C and optionally storing at that temperature for 4-48 hours to allow partial crystallisation of the dairy and non-dairy fats and (d) inducing phase inversion of the resultant mixture. At least some of the non-dairy fat is preferably hard or hardened. The non-dairy fat may be an animal fat, including fish oil, or vegetable oil and is preferably a vegetable oil. The product has a smooth, non-grainy texture in which dairy flavour is predominant.

## Description

The present invention relates to a process for the production of a dairy spread and in particular to a process for producing a butter-like spread containing a proportion of non-dairy fat, especially vegetable fat, and having good organoleptic characteristics.

A major problem faced by the dairy industry in the production of butter and dairy spreads is that a significant proportion of the total fat is lost into the buttermilk at the churning or phase inversion stage of manufacture. In butter making, as much as 0.6% of the total fat is lost into the buttermilk and in certain mixed products the fat loss can be as high as 1.2%. Such high levels of fat loss represent a heavy financial burden to the producers of butters and dairy spreads.

A process and plant for producing a milk-based fat product in which the fat loss is reduced to 0.15% are disclosed in WO89/10700. In that process, cream is concentrated to between 60% and 85% fat at between 50°C and 70°C. After cooling to between 15°C and 30°C, the concentrated cream is left to crystallise partially. Unhardened vegetable oil is then added and the mixture is gently worked at a temperature of between 8°C and 14°C until phase inversion is completed. Products made by this process can conveniently incorporate up to 40% of the fat as vegetable derived oil. These products were designed for the Scandinavian market, where predominating lactic flavours in products of this type are customary and are achieved by the addition of a souring culture distillate, and where the vegetable oil component of mixed products is unhardened.

It has been found that the process described in WO89/10700 is unsuitable for the manufacture of the sweet cream dairy spread products which are popular in markets in other parts of Europe and elsewhere. Products made by the process of WO 89/10700 and to which no lactic flavours have been added have been found to be less organoleptically acceptable outside the Scandanavian market, as the taste of the vegetable oil component has been found to be dominant in some of the products produced. A further difficulty arises where at least a portion of the vegetable fat is hardened. In that case, the resulting products have been found to have a grainy consistency, which is disliked by consumers and which is in contrast to the smoothness of similar dairy-spreads produced by other known processes. This grainy consistency is a consequence of the difficulty of obtaining good mixing of the vegetable fat component into the cream at temperatures below the melting point of the hardened vegetable fat. The problem is compounded by the necessity for a very gentle mixing of the vegetable oil into the cream so as to avoid premature phase inversion, and results in a poor blending which is manifested in the final product as a grainy texture and a pronounced vegetable fat flavor.

An object of the present invention is to provide a fat-efficient process for producing a non-oily tasting, organoleptically acceptable dairy-spread.

References to fat herein include references to that material whether in solid, semi-solid or liquid state. References to ripening include ripening, ageing and partial crystallisation of the blend of dairy and non-dairy fat.

The present invention provides a process for preparing a dairy spread comprising concentrating dairy cream to between 55 and 85% fat, blending the concentrated cream with edible non-dairy fat at between 50°C and 70°C to produce a homogeneous dispersion of droplets of the non-dairy fat in the cream, emulsifying the resulting non-dairy fat/cream blend, cooling the blend to between 15°C and 30°C and working the blend to obtain phase inversion.

Conveniently, the process includes ripening the blend at between 15°C and 30°C for between 4 and 48 hours partially to crystallise at least a portion of the fat in the blend. At this stage, any fat with a melting point above that of the ripening temperature will at least partially crystallise, whether it is derived from the cream fraction or the non-dairy fat fraction.

In selecting the non-dairy fat or fats for the blend, at least a portion thereof is chosen to have a melting point higher than the temperature of the ripening step and that portion is crystallised simultaneously with the cream fat during the ripening and phase inversion steps. The required hardness may be obtained, where required, by a known hardening process such as hydrogenation.

Advantageously, the blending step is carried out at between 55°C and 65°C, preferably 60°C and the ripening step is conducted at between 18°C and 24°C for between 4 and 18 hours.

The invention also provides a product produced by a process as described above, in which the dairy spread comprises between 40% and 80% total fat, of which not more than about 85% is non-dairy fat.

Accordingly, the present invention provides a process as defined in the appended claims.
The process of the present invention differs significantly from that of WO89/10700 in the manner in which the cream and non-dairy fat are mixed. According to the present invention, the cream and non-dairy fat are blended together at an elevated temperature, after which the temperature is reduced and the cream/non-dairy fat blend is optionally held for a time for ripening and partial crystallisation to occur. The high temperature blending ensures that a homogeneous dispersion of non-dairy fat droplets emulsified in the cream is obtained, as all of the fat is in liquid form. This is particularly important where at least a portion of the non-dairy fat is hardened and/or has a melting temperature above that at which the phase inversion is conducted.

In a preferred embodiment of the process, a ripening step is included during which the cream and any non-dairy fat or fats with a melting point above that of the ripening step temperature are allowed to crystallise simultaneously during the ripening/tempering and phase inversion steps. The resulting even mix of crystal types imparts favourable textural and taste characteristics to the spread. In particular, the spread does not have an oily flavour and mouth-feel but instead has the buttery flavour liked and expected by consumers who are accustomed to sweet cream dairy spreads.

The product obtained from the process in which the ripening step is omitted also has a good buttery taste, but is structurally and texturally somewhat similar to a margarine, as the shorter crystal-growth time available (i.e. during phase inversion only) permits growth of small fat crystals which are similar to those present in margarines.

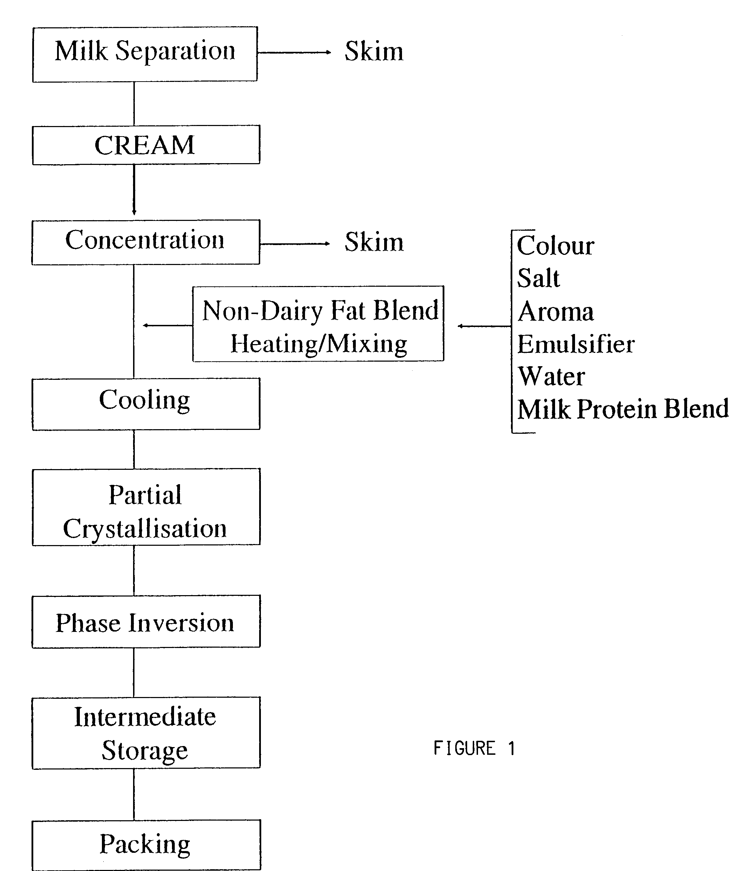

Figure 1 is a flow chart showing the steps in a preferred process according to the present invention. The first step is to separate dairy milk into two fractions, namely a cream fraction and a skim milk fraction. The cream fraction should contain 30% to 50% fat, and typically, the cream fraction would contain about 40% fat.

The cream is then concentrated by any suitable method, for example that described in WO89/10700, to between 55% and 85% fat, optimally about 76% fat. The concentration step is carried out at a temperature between 50°C and 70°C, preferably about 60°C. The temperature of the concentrated cream should be between 50°C and 70°C, preferably about 60°C for the blending step.

Non-dairy fat to be admixed with the concentrated cream is held in a separate tank and its temperature is elevated to between 50°C and 70°C, preferably about 60°C and ideally to the same temperature as that of the concentrated cream. The non-dairy fat may be any non-dairy fat or blend of fats. Where appropriate, the fat or fats may be unhardened or partially or totally hardened. The non-dairy fat may be selected from any edible non-dairy animal or vegetable fat or fats, for example tallow, fish oil, soya bean oil, sunflower oil, safflower oil, palm oil, rapeseed oil, coconut oil and corn oil or any combination thereof.

The non-dairy fat may be pre-blended as any desired hardened/ unhardened combination of fats, for example, as a mixture of a hardened and unhardened fat species, or two or more fat species (hardened or unhardened). Alternatively, non-dairy fats of different types and/or hardnesses may be held in separate holding tanks and dosed in as required to obtain the particular final blend required to mix with the concentrated cream.

Other components may conveniently be added to the concentrated cream at the non-dairy fat-addition step. For example any or all of skim milk, water and/or a water phase, flavouring, salt, emulsifier or colour may be added. Where ingredients are miscible with the non-dairy fat, such ingredients may be pre-blended with the non-dairy fat, for instance, oil-based flavouring and colourings. Generally speaking, the amount of skim milk and/or water or water phase added will be adjusted so as to standardise the cream. The standardisation step may be conducted directly after the cream concentration step or at the blending stage. Additionally or alternatively, a nutritionally enriched final product may be obtained by the addition of protein, fibre, vitamins and/or carbohydrate or other additives.

The non-dairy fat fraction, and optionally the other ingredients, are added to the concentrated cream by suitable means such as a proportioning pump and the resulting mixture is agitated by mixing (for example in a static mixer, dynamic mixer, homogeniser or a homogenising valve) until a thorough and homogeneous mixing of the cream and non-dairy fat fractions is achieved. This mixing decreases the globule size of the cream fat and homogeneously disperses and emulsifies the non-dairy fat in the cream so that the non-dairy fat is dispersed in the cream as emulsified fine droplets. The mix is then optionally pasteurised at about 90°C for 20 seconds, after which the temperature is decreased to between 15°C and 30°C and preferably to between 18°C and 22°C. The mix is then stored in a temperature-controlled crystallising tank to ripen for 4 to 48 hours and preferably 4 to 12 hours.

During this ripening time, partial crystallisation occurs of all the fats in the product having melting points above the prevailing temperature of storage and the crystals formed are a mix of butter fat crystals and non-dairy fat crystals. This simultaneous crystallisation of the dairy and non-dairy fats imparts to the product improved organoleptic characteristics compared to the product of the prior art where the cream fraction is allowed substantially to crystallise before addition of a vegetable oil fraction. Furthermore, where at least some of the non-dairy fat is hard or hardened, the vigorous blending of the cream and non-dairy fat fractions at elevated temperature and before ripening and/or phase inversion results in the thorough and homogeneous mixing of these components by dispersal of the non-dairy fat into droplets and emulsification of these droplets in the cream. This contributes to the smooth texture of the product.

By contrast, in the process described in WO89/10700, unhardened vegetable oil is added to the already partially ripened cream and mixed at about 12°C. No simultaneous partial crystallisation of dairy and vegetable fats occurs because only unhardened oil is used which remains liquid below the temperature of the phase inversion step.

If part of the vegetable oil were hardened, the cool mixing disclosed in WO89/10700 would not permit the thorough mixing of the components which can be achieved by warm mixing, as the hard fraction of the oil crystallises at low temperature, adding to the difficulty of mixing a cooled hardened fat into a cooled cream. Cool gentle mixing of the oil and cream in this prior known process is necessary to inhibit premature phase inversion, but results in a product with a grainy consistency.

Yet a further advantage of the warm mixing of cream and non-dairy fat according to the present invention, in the case where at least a portion of the non-dairy fat is in liquid form, lies in the known tendency of liquid oil, particularly liquid vegetable oil, to pick up flavours or taints. When surrounded by dairy fats and proteins, the liquid fat tends to pick up flavours from these, lending a dairy-like flavour to the non-dairy fat. By contrast, cold hard fat is not disposed to assume flavours. Thus, the warm mixing contributes to the assumption of dairy flavours in the vegetable oil, which enhances the overall dairy character of the product.

In preparing the product according to the present invention, after the optional ripening step is completed, the product is phase inverted by known means, for example as described in WO89/10700, by cooling to about 12°C in a slowly turning cooling tube, then passing the product through first and second pin rotors to work the product gently so as to achieve phase inversion, followed by pumping the product to a second cooling tube to chill the product to about 10°C. An alternative phase inversion sequence is to send the product at about 22°C to a first chilling tube, exiting the product at about 17°C and transferring it to a second chilling tube which cools the product to about 13°C. From there, the product is sent to the pin rotor or worker and worked at about 13°C. The exact inversion conditions will be determined depending on the particular product being manufactured. Finally, the finished product is sent for intermediate storage or directly to a packing plant. No further non-dairy fat is added during the phase inversion step. This is in contrast to the process described in WO89/10700. In that process, the vegetable oil is preferably added in two aliquots, the first and larger addition taking place at the beginning of the phase inversion step, prior to sending the cream to the first cooling tube. A second, smaller aliquot of oil is added between the mixture leaving the second pin rotor and entering the second cooling tube.

While the plant described in WO89/10700 is particularly suitable for achieving the required phase inversion, other known apparatus is also suitable for this purpose, for example the phase inversion can be done by votator. Suppliers of equipment suitable for achieving phase inversion are Alfa-Laval, Gerstenberg and Agger, Johnson, and Schroeder.

In an alternative embodiment of a process according to the invention (not shown in Figure 1), the ripening step is omitted, but all other process steps including mixing of the cream and non-dairy fat, followed by optional pasteurisation of the resultant mixture, are as described above. Then, instead of transferring the mixture to a ripening tank, it is brought to about 22°C and directly brought into the phase inversion step. In this case, crystallisation of the cream fat and non-dairy fats (if appropriate) occurs only during phase inversion, resulting in the formation of smaller crystals than if ripening had been permitted. Nevertheless, the thorough mixing of the non-dairy fat and cream gives the flavour advantages described above in relation to the preferred embodiment, including uptake of buttery aromas by any liquid non-dairy fat used. The differences in the products made by the preferred and alternative embodiments lie in their structural and textural characteristics rather than their taste characteristics, texturally the former resembling butter and the latter resembling margarine, while as regards flavour, both resemble butter.

The process of the present invention can be used to produce a range of products from low to high fat and containing a range of proportions of dairy to non-dairy fats. The exact composition for each desired product will have to be decided on a case by case basis depending on such factors as the hardness of the cream, the nature of the non-dairy fat or blends being used and their degree of hardness, the required spreadability and melting range of the product and the required fat content of the final product. Generally, the higher the fat content, the more readily the product will phase invert. Products containing between 20% and 80% fat, with up to about 85% of the fat being derived from non-dairy sources, can be made by the process of the invention. Products having 40% fat phase and 60% aqueous phase can readily be manufactured by the process.

The following non-limiting examples are given by way of illustrating the invention.

### Example 1

This example demonstrates the batch-wise production of a spread having a total of 74% fat, of which 40 parts derive from dairy cream and 60 parts derive from vegetable oil.

13.86 kg of dairy cream (70% butter fat) are heated to 60°C and standardised to 54.11% fat with 4.07 kg water. To the standardised cream is added 450g of dry micro-salt. 13.32 kg of a soya oil blend comprising 50% liquid soya oil and 50% soya oil hardened to a slip melting point of 36°C to 38°C is heated to 60°C. The hot oil blend is then mixed with the standardised cream at 60°C. The cream/oil mixture is kept agitated, then passed through a single stage homogenising valve at a pressure of 70-100 p.s.i. to give a homogeneous filled cream. The filled cream is cooled to 22°C and held at that temperature in a ripening tank for 12 hours to enable partial crystallisation of the cream and some of the vegetable fats to take place. The product is then fed through the high pressure pump of a Gerstenberg and Agger (Denmark) Labo-Perfector pilot plant type 2 x 57 with a high pressure pump type 2/30/4. This plant has two chilling tubes and a pin worker which is cooled by chilled water. The pump is operated at scale point 30 on the 0 to 100 scale. The mix enters the first chilling tube at 22°C and exits at 17°C, then enters the second chilling tube at 17°C and exits at 13°C. Both tubes are turning at about 600 RPM. Finally, the product enters the pin worker at 13°C and exits to the packaging plant at the same temperature. Working in the pin worker is at about 250 r.p.m.

### Example 2

The example demonstrates the production of a spread having 65% total fat, of which 30% derives from dairy cream and 70% derives from vegetable oil. The vegetable oil used is a blend of 85% of soya oil hardened to a slip melting point of 25°C and 15% of soya hardened to a slip melting point of 38°C. The product is made by a continuous process.

2.78 kg of pasteurised 70% fat cream which has been concentrated in an Alfa-Laval hermetic type separator is stored, with agitation, at 60°C. To this is added 2.57 kg of pasteurised skim milk which has a pH 5.5 and a temperature of 60°C, to give 5.35 kg cream with a total fat content of 36.37%. 100g of salt is added to this cream. In a separate tank, 4.55 kgs of the oil blend described above is heated to 60°C. Each of the cream and oil are then pumped by a positive pressure metering pump (Bran and Luebbe type) until they form a merged stream which passes through a static mixer and then through a homogenising valve operating at 70 p.s.i. The temperature of the mixture is kept at 60°C. The cream and oil metering pumps are calibrated to draw the cream and oil from their respective holding tanks in the ratio of 1.1978 parts cream to 1 part oil.

The filled cream then is transferred into a cooling drum and is chilled to 21°C, after which it is stored in a temperature controlled tank at 21°C. The tank is fitted with an agitator which rotates at 3 r.p.m. intermittently. The filled cream is ripened in the tank for 8 hours to allow partial crystallisation, after which it is phase inverted substantially as described in WO 89/10700. This involves chilling the mixture to 12°C, then passing it successively through two scraped surface crystallising units and finally chilling to about 14°C prior to sending the product for packing. No oil addition is made during phase inversion.

### Example 3

This example demonstrates the production of a product having 60% total fat, of which 50% of the fat derives from dairy cream and 50% derives from a blend of refined deodorised fish oil and refined deodorised tallow.

The proportions of fish oil to tallow may be altered considerably depending on the desired degree of firmness required in the finished product. For instance, one may use very little or no fish oil and make a product suitable for spreading or for pastry making, or use a high proportion of fish oil and make a frigo spreadable product.

### INGREDIENTS:

7.89 kgs Cream of 76% fat.
5.61 kgs Water.
0.40 kgs Salt.
0.10 kgs Dimodan OT Emulsifier.
1.26 kgs R.D. Tallow.
4.74 kgs R.D. Fish Oil.

7.89 kgs of cream at 76% of fat, which has been concentrated in an Alfa-Laval Hermetic type separator, is mixed with 5.61 kgs of pasteurised water to standardise, to give 13.50 kgs of cream at 44.45% fat.

400 g of salt is added to this cream.

This cream blend is then held at 60°C and kept stirred. In a separate tank 4.74 kgs of refined deodorised fish oil and 1.26 kgs of refined deodorised tallow are heated to 60°C. 100 grams of Dimodan OT emulsifier is added.

At this stage, if desired, colouring or flavouring may be added. These ingredients are all mixed together to make a uniform oil blend.

Both the cream fraction and the oil fraction are then pumped in proportion by a positive pressure metering pump (Bran + Lubbe type) until they form a merged stream which passes through a static mixer and then through a homogenising valve operating at 70 p.s.i. (482.65 kPa).

The temperature of the mix is kept at 60°C.

The cream and oil metering pump is calibrated to draw the cream and oil from their respective holding tanks in the ratio of 2.1311 parts of cream to 1 part oil.

The blended cream/oil is then transferred through a cooling tube where it is cooled to 22°C, and into a temperature controlled cooling vat and held at that temperature for 10 hours to enable partial crystallisation of the cream and some of the non-dairy fats to take place. The product is then fed through the high pressure pump of a Gerstenberg and Agger (Denmark) Labo-Perfector pilot plant type 2 x 57 with a high pressure pump type 2/30/4. This plant has two chilling tubes and a pin worker which is cooled by chilled water. The pump is operated at scale point 30 on the 0 to 100 scale. The blend enters the first chilling tube at 21.6°C.

### Process Parameters:

1st Chilling tube - R.P.M. 186
NH₃ Gauge temperature -8°C
2nd chilling tube - R.P.M. 186
NH₃ Gauge temperature +5°C.
Pin worker - R.P.M. 168
Outlet temperature of product +14°C.

The flow sequence is through the 1st cooling tube, holding tube, pin worker, then the 2nd cooling tube. The product exits the pin worker and goes to the packing plant at +14°C.

It will of course be understood that the invention is not limited to the specific details described herein, which are given by way of example only, and that various modifications and alterations are possible within the scope of the invention as defined in the appended claims.

## Claims

1. A process for preparing a dairy spread comprising concentrating dairy cream to a fat content of 55-85%, blending the concentrated cream with edible non-dairy fat at 50-70°C to produce a homogeneous dispersion of oil droplets and emulsification of these oil droplets in the cream, cooling the blend to between 15-30°C and working the blend to obtain phase inversion.

2. A process according to Claim 1, including the step of partially crystallising the blend at 15-30°C for 4-48 hours prior to phase inversion.

3. A process according to Claim 2, in which the partial crystallisation step is conducted at 18-24°C for 4-18 hours.

4. A process according to any of Claims 1 to 3, in which at least a portion of the non-dairy fat has a slip melting point above 15-30°C and that portion crystallises simultaneously with the cream during the partial crystallisation step and/or the phase inversion step.

5. A process according to any preceding claim, in which the non-dairy fat comprises a blend of liquid and hard or hardened fat or fats, including blends of non-dairy fat species from different sources.

6. A process according to any preceding claim, in which the dairy spread comprises 40-80% fat, of which up to 85% is non-dairy fat.

7. A process according to any preceding claim, in which the blending step is conducted at 55-65°C, preferably at about 60°C.

8. A process according to any preceding claim in which the non-dairy fat is selected from non-dairy animal, fish or vegetable fat or combinations thereof.

9. A process according to Claim 8, in which the non-dairy fat is a vegetable fat selected from soya bean oil, sunflower oil, safflower oil, palm oil, rapeseed oil, coconut oil, corn oil or combinations thereof.
